(19) Europäisches Patentamt
European Patent Office
Office européen des brevets

(11) EP 2 711 680 B1

(12) EUROPÄISCHE PATENTSCHRIFT

(45) Veröffentlichungstag und Bekanntmachung des Hinweises auf die Patenterteilung:
**19.12.2018 Patentblatt 2018/51**

(51) Int Cl.:
***G01M 7/00*** *(2006.01)* ***G01M 5/00*** *(2006.01)*

(21) Anmeldenummer: **13183649.6**

(22) Anmeldetag: **10.09.2013**

# (54) Verfahren zur schwingungstechnischen Bewertung von Gas-Druckregelanlagen

Method for the oscillation evaluation of gas pressure control installations

Procédé d'évaluation par oscillation d'installations de régulation de la pression du gaz

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2012 DE 102012018443**

(43) Veröffentlichungstag der Anmeldung:
**26.03.2014 Patentblatt 2014/13**

(73) Patentinhaber: **innogy Netze Deutschland GmbH**
**45128 Essen (DE)**

(72) Erfinder:
- **Badura, Christian**
  **58239 Schwerte (DE)**
- **Brümmer, Andreas**
  **48249 Dülmen (DE)**

(74) Vertreter: **Richly & Ritschel Patentanwälte PartG mbB**
**Postfach 100411**
**51404 Bergisch Gladbach (DE)**

(56) Entgegenhaltungen:
**EP-A1- 1 182 300** **WO-A2-2007/102155**
**DE-A1-102008 005 700** **DE-A1-102008 015 588**

- **Dr.-Ing Johann Lenz: "Untersuchung von strömungs-und schwingungstechnischen Effekten an Gasdruckregelanlagen", , 11. März 2010 (2010-03-11), XP055269888, Gefunden im Internet: URL:http://www.koetter-consulting.com/coRED/_data/2010_KCE-Lenz_Gas-WS-2010.pdf [gefunden am 2016-05-02]**
- **Igor Bazovsky: "Reliability Theory and Pratice", 31 December 2004 (2004-12-31), Dover, New York pages 142-143,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 711 680 B1

## Beschreibung

Die Erfindung betrifft ein Verfahren zur schwingungstechnischen Bewertung und/oder Kategorisierung von Gas-Druckregelanlagen eines Gasnetzes.

Die Erfindung betrifft insbesondere ein Verfahren zur schwingungstechnischen Bewertung von Gas-Druckregelmessanlagen.

Solche Anlagen sind Anlagen zur ein- oder mehrstufigen Gasdruckreduzierung oder Gasdruckerhöhung, bei welchen in der Regel zusätzlich noch eine Gasmengenmessung vorgenommen wird.

Für den Ferntransport von Erdgas wird dieses normalerweise auf einen Druck von 80 bar bis 100 bar verdichtet. Auf dem Weg zum Endverbraucher wird dieses Gas wieder entspannt, und zwar in der Regel zweistufig bis auf einen Druck (Überdruck) von wenigen Millibar, mit welchem beispielsweise das Erdgas beim Endverbraucher verfügbar ist. Hauptbestandteile von Gas-Druckregelanlagen sind Regel- und Absperrarmaturen, Messgeräte sowie Messfühler, Filter sowie gegebenenfalls Wärmeübertrager zur Vorwärmung des entspannungsbedingt abgekühlten Gases. Gegebenenfalls umfassen Gas-Druckregelmessanlagen auch Einrichtungen zur Zugabe von Odorstoffen.

Die Regelventile in Gas-Druckregelanlagen sind wegen ihrer signifikanten Druckreduzierung in der Regel schwingungsanregend, und zwar wegen einer entsprechend hohen Beschleunigung des druckreduzierten Gases. Daraus ergibt sich eine akustische Anregung der Gassäulen und der dem Regelventil vor- und nachgeschalteten Teile der Anlage. Angeregt durch eine akustische Resonanz kann es an Anlagenteilen zu Strukturschwingungen kommen, die beispielsweise an Flanschverbindungen Leckagen verursachen oder beispielsweise eine Beschädigung von Messeinrichtungen oder Messfühlern in Form von Tauchhülsen verursachen können.

Insbesondere Leckagen an Flanschverbindungen stellen ein gewisses Gefahrenpotential dar. Das ausströmende Gas kann sich im Umfang der Anlage verteilen und durch eine Gasvorwärmanlage entzünden. Es ist daher wünschenswert, dass schwingungstechnische Risikopotential von Gas-Druckregelmessanlagen beurteilen zu können, um gegebenenfalls Untersuchungen bzw. Umbaumaßnahmen an bestehenden Gas-Druckregelmessanlagen einzuleiten oder solche Risiken bei der Projektierung von neuen Anlagen zu berücksichtigen.
Theoretische Überlegungen zur Vermeidung von Schwingungen in der Planungsphase von GDRM Anlagen werden beispielsweise in dem Fachvortrag "Untersuchungen von strömungs-und schwingungstechnischen Effekten an Gasdruckregelanlagen" von Dr. Johann Lenz (5. Kötter Workshop Gasmengenmessung 2010) angestellt.

Weiterer Stand der Technik ist aus den Dokumenten DE 10 2008 015588 A1, EP 1 182 300 A1, WO 2007/102155 A2 und DE 2008 005700 A1 und Igor Bazovsky: "Reliability Theory and Pratice", 31. Dezember 2004 (2004-12-31) bekannt.

Der Erfindung liegt daher die Aufgabe zugrunde, ein Verfahren zur automatisierten schwingungstechnischen Bewertung von Gas-Druckregelanlagen oder Verdichteranlagen bereitzustellen. Das Verfahren soll insbesondere eine vereinfachte und typisierte Risikobewertung von Gas-Druckregelanlagen ermöglichen, ohne dass die Durchführung aufwendiger Messungen erforderlich wäre.

Die der Erfindung zugrundeliegend Aufgabe wird gelöst durch das Verfahren nach Anspruch 1.

Das Verfahren umfasst die vorhergehende Katalogisierung und Kategorisierung von typischen in einer Gas-Druckregelanlage verbaubaren schwingungstechnisch relevanten Anlagenteilen, beispielsweise in Form von Rohren, Behältern, Regelorganen, Absperrorganen, Wärmeübertragern, Übergangsstücken, Tauchhülsen, Rohrstützen oder Aufhängungen. Die in der Datenverarbeitungseinrichtung hinterlegten Daten dieser typisierten Bauteile werden dann in dem Verfahren zum Erfassen und Abbilden einer geplanten oder bestehenden Anlagegeometrie verwendet.

Erfindungsgemäß ist die Darstellung bzw. Einordnung und Bewertung des Risikopotentials einer bestehenden oder einer zu projektierenden Anlage mittels einer Kennziffer vorgesehen, die ein relatives Maß für das Gefährdungspotential der zu projektierenden oder bestehenden Anlage darstellt.

Das Verfahren gemäß der Erfindung zeichnet sich dadurch aus, dass die Kennziffer für die Anlage sich aus Einzelkennziffern für Teile der Anlage und einer allgemeinen Kennziffer zusammensetzt, dass die Einzelziffern als Funktion der Koinzidenzanalyse für Teile der Anlage ermittelt werden und dass die allgemeine Kennziffer in Abhängigkeit eines oder mehrerer Kriterien ausgewählt aus der Gruppe Alter der Anlage, Alter von Anlagenteilen, Fahrweise der Anlage, Anzahl der Komponenten der Anlage, Anzahl der Messstellen in den Rohrleitungen, Höhe der Anlage und schwingungsbedingte Vorschädigungen, bestimmt wird.

Das Verfahren gemäß der Erfindung umfasst zunächst die Identifizierung der für die betreffende Anlage auftretenden Randbedingungen, beispielsweise ob die verwendeten Armaturen geschlossen oder durchgängig sind, ob T-Stücke der Leitungen offen oder durchgängig sind, ob verwendete Behälter offen oder geschlossen sind und in welchem Zustand zwischen vollständig geöffnet und vollständig geschlossen sich die Regelarmaturen befinden. Sodann erfolgt eine Erfassung der Anlagengeometrie beginnend von der Anregungsquelle (Regelventil) einschließlich aller relevanten akustisch wirksamen Rohrleitungslängen. Die akustischen Eigenfrequenzen werden anhand der zuvor ermittelten Randbindungen und der Schallgeschwindigkeit des Gases ermittelt. Dann werden weitere Randbedingungen zur Bestimmung der mechanischen Eigenfrequenzen ermittelt. Hier sind die Masse der Bauteile, die Anzahl der Anschlüsse und die Art der Lagerung (Loslager/Auflager/Festlager) relevant. Dann erfolgt die Berechnung der mechanischen Eigenfrequenz durch Verwendung algebraischer Gleichungen, die grundsätzlich in der einschlägigen Fachliteratur veröffentlicht sind und bekannt sind.
Sodann erfolgt eine Bewertung der Schwingungsrisiken hinsichtlich möglicher Koinzidenzen von akustischer und mechanischer Eigenfrequenz. Je weiter die Frequenzbereiche der akustischen und mechanischen Eigenfrequenz sich überlappen, je größer ist die Gefahr eines Resonanzfalls mit potentiell großer Schwingungsamplitude. Die relevanten akustischen und mechanischen Eigenfrequenzen vorzugsweise ausgehend von einem Regelventil zu dem darauffolgenden Regelventil oder einem Behälter werden miteinander verglichen. Aus dieser Analyse ergeben sich keine diskreten Frequenzen, sondern Frequenzbereiche. Hieraus wird dann eine Kenngröße für das betreffende Bauteil abgeleitet. Diese Kenngröße ist kein absoluter Wert, sondern ein relativer Wert, der das Gefährdungspotential des betreffenden Bauteils kennzeichnet und der summarisch in die Berechnung der Gesamtkenngröße eingeht.

Bei einer vorteilhaften Variante des Verfahrens ist die Verwendung eines elektronischen Bauteilkatalogs in Form einer Datenbank vorgesehen.

Zweckmäßigerweise erfolgt die Koinzidenzanalyse unter Berücksichtigung eines Frequenzbereichs von 5 Hz bis 30 Hz. Dieser Frequenzbereich hat sich als für einen möglichen Resonanzfall relevant ergeben.

Bei einer vorteilhaften Variante des Verfahrens ist vorgesehen, dass die allgemeine Kennziffer zu 50 % bei der Ermittlung der Gesamtkennziffer gewichtet wird.

Die Gesamtkennziffer wird vorzugsweise additiv und/oder multiplikativ aus numerischen Einzelwerten erhalten, wobei deren Betrag der Höhe des Risikopotentials der Anlage entspricht.

Zweckmäßigerweise erfolgt die Durchführung des Verfahrens vollständig unter Zuhilfenahme einer Datenverarbeitungseinrichtung und unter Verwendung einer oder mehrerer Datenverarbeitungsprogramme, die auf eine Datenbank zurückgreifen, welche eine Bauteilbibliothek umfasst, in welcher die standardmäßig verwendeten Bauteile katalogisiert und kategorisiert sind. Wenigstens ein Datenverarbeitungsprogramm ermittelt die Anlagenkennziffer nach Eingabe der Randbedingungen der Anlage und nach Auswahl der in der Anlage verwendeten Bauteile automatisch.

Zweckmäßigerweise umfasst die Annahme einer Schwingungsanregung die Bestimmung einer potentiellen Schwingungsanregung durch ein Regelventil.

Als Teile der Anlage können mehrere Anlagenabschnitte sowie als auch einzelne Bauteile der Anlage betrachtet werden.

Das der Erfindung zugrundeliegende Verfahren wird nachstehend im Detail erläutert, wobei insbesondere die schwingungstechnische Kategorisierung bzw. Einordnung einer typischen Gas-Druckregelanlage erläutert wird, die im Folgenden als GDRM-Anlage bezeichnet wird. Weiterhin wird im folgenden die Ermittlung der zuvor erwähnten Gesamtkennziffer erläutert werden.

Das Ergebnis der im Weiteren vorgestellten schwingungstechnischen Kategorisierung sind Kennziffern, mit denen die Anlagen untereinander verglichen werden können. Hierbei handelt es sich um eine Gesamtkennziffer $K_{ges}$, die sich aus den Kennziffern der Koinzidenzanalyse $K_{Ko}$ und einer allgemeinen Bewertungskennziffer $K_{All}$ zusammensetzt. Die beiden Kennziffern gehen jeweils zu 50 % in die Gesamtkennziffer $K_{ges}$ ein:

$$K_{ges} = (K_{Ko} + K_{All})/2.$$

Die beiden Bewertungskennziffern $K_{KO}$ und $K_{All}$ sind ihrerseits wieder in Unterpunkte gegliedert. Dieser Zusammenhang ist schematisch in dem nachfolgenden Verzweigungsbaum der Abbildung 1 dargestellt, wobei die umrandeten Stichpunkte die Basisinformation darstellen, die für die Ermittlung der Kennziffern notwendig sind. Diese Punkte werden anhand eines Bewertungsschemas zueinander gewichtet.

Die Grundüberlegung für die schwingungstechnische Einordnung von GDRM-Anlagen ist das mögliche Auftreten von untypischen Schwingungen, welche an eventuell vorhandenen Schwachstellen der Anlage (z. B. Flanschverbindungen, Wärmeübertragerrohre, Anbauteilen) zu Schäden führen könnten. Untypische Schwingungen sind auftretende Schwingungen an Rohrleitungen oder Anlagenbauteilen, die aufgrund von

- Schwingungsanregungen, die akustische Eigenfrequenzen in den Rohrleitungen anregen, und durch das Zusammentreffen (Koinzidenz) mit mechanischen Eigenfrequenzen von Rohrleitungsabschnitten

- weiteren möglichen Schwingungsanregungen (z. B. zwangserregte Schwingungen, Reglerschwingungen), die nicht in dem vorherigen Punkt erfasst werden

zu überhöhten Rohleitungsschwingungen führen.

Diese beiden Punkte führen dazu, dass die Gesamtkennziffer $K_{ges}$ in eine Kennziffer der Koinzidenz $K_{Ko}$ und eine Kennziffer mit allgemeinen Aspekten $K_{All}$ unterteilt wird. Diese drei Kennziffern werden berechnet und stehen für die weitere Analyse zur Verfügung, damit ersichtlich wird, wie sich die Bepunktung einer speziellen GDRM-Anlage zusammensetzt.

Die Kennziffer der Koinzidenz $K_{Ko}$ wird mit Hilfe von eng gesteckten Randbedingungen (Auswertung des Frequenzbereiches zwischen 5 Hz und 30 Hz, Anregung vom Regelventil, nur Berücksichtigung von ersten mechanischen und akustischen Eigenfrequenzen) ermittelt, die aufgrund der Erfahrung zu untypischen Schwingungen führen können. Mit dieser Herangehensweise werden die wesentlichen Koinzidenzen erfasst. Um die verbleibenden Lücken in dieser Betrachtungsweise zu schließen, werden weitere objektive Aspekte in der allgemeinen Kennziffer $K_{All}$ zusammengefasst.

Zu diesen objektiven Aspekten zählen mögliche weitere Quellen für Pulsationen und Schwingungen (Rückschlagklappen, thermodynamische Instabilitäten des Wärmeübertragers, in die Strömung hereinragende Bauteile), alle wesentlichen Schwachstellen in der Anlage (auch in Bereichen, in denen keine Koinzidenz auftritt) und allgemeine Aspekte wie das Alter und die Betriebsweise der Anlage.

Der Zahlenwert der Gesamtkennziffer $K_{ges}$ (und somit alle in die Kennziffer einfließenden Einzelaspekte) orientiert sich an einer Modellanlage, die eine durchschnittliche Anlage repräsentieren soll. Die Einordnung der GDRM-Anlagen basiert somit auf Punktzahlen für die Einzelaspekte, die additiv und multiplikativ zu einer Gesamtpunktzahl kombiniert werden. Je höher die einzelnen Werte sind, desto höher ist das schwingungstechnische Potential, wobei (zum jetzigen Zeitpunkt) keine Aussage darüber getroffen werden kann, wie hoch die Wahrscheinlichkeit eines schwingungstechnischen Schadens ist. Durch die Höhe der Punktzahlen werden die Anlagen lediglich miteinander vergleichen. Bei den Überlegungen der Höhe der Punktzahlen ist die Relation zueinander und die Abstufung bezüglich des einzelnen Aspektes entscheidend. Zu ersten Erläuterung sind diese Werte in den Tabellen 1 und 2 dargestellt. In der Tabelle 1 ist die Relation der allgemeinen Kennziffer $K_{All}$ zu der Koinzidenz-Kennziffer $K_{Ko}$ zu sehen. Bei beiden wird darauf geachtet, dass der maximale Wert bei ungefähr 50 und der Wert der Modellanlage zwischen 10 und 15 liegt. In der Tabelle 2 ist die Zusammensetzung der allgemeinen Kennziffer in Bezug auf die Einzelaspekte dargestellt. Wie die Werte aus den Tabellen 1 und 2 errechnet werden und warum diese Aspekte ausgewählt wurden, wird nachfolgend dargestellt. Die zum Teil physikalischen Hintergründe für die Ermittlung der Kennzahlen sind allgemein bekannt.

Tabelle 1:

Tabelle 1: Minimale und maximale Zahlenwerte für die allgemeine und die Koinzidenz-Kennziffer sowie Kennziffer der Modellanlage (Referenz-Anlage).

| | Minimum | Maximum | Modellanlage |
|---|---|---|---|
| Allgemeine Kennziffer $K_{All}$ | < 4 | ~ 50 | 11,4 |
| Koinzidenz Kennziffer $K_{Ko}$ | 0 | ~ 50 | 12,8 |
| Gesamtkennziffer $K_{ges}$ | < 2 | ~ 50 | 12,1 |

Tabelle 2:

Tabelle 2: Übersicht und Bewertung der Aufteilung der allgemeinen Kennziffer in die Einzelaspekte

| **Allgemeine schwingungstechnische Aspekte** | **Maximum** | **Modellanlage** |
|---|---|---|
| **Potentielle Quellen für die Schwingungsanregung** | | |
| Strömungsgeschwindigkeit und Volumenänderungsleistung über das Ventil* ($F_{All,2}$) | 10,0 | 5,0 |
| Fahrweise der Anlage* ($F_{All,1}$) | 8,0 | 4,0 |
| Auslegung Regelventil* ($F_{All,3}$) | 4,0 | 2,0 |
| Weitere Quellen (Unsicherheit) | 1,0 | 1,0 |
| **Summe der Werte für die potentiellen Quellen** | **23,0** | **12,0** |
| **Potentielle "Schwachstellen" in der Anlage** | | |
| Inbetriebnahme der Anlage ($F_{All,4}$) | 0,20 | 0,12 |
| Austausch Wärmeübertrager ($F_{All,5}$) | 0,03 | 0,01 |

(fortgesetzt)

| Potentielle "Schwachstellen" in der Anlage | | |
|---|---|---|
| Austausch Regelventil ($F_{All,5}$) | 0,03 | 0,01 |
| Austausch Messeinrichtung ($F_{All,5}$) | 0,03 | 0,01 |
| Rohrleitungskomponenten in der Anlage* ($F_{All,6}$) | 0,50 | 0,20 |
| Tauchhülsen in der Anlage* ($F_{All,7}$) | 0,50 | 0,20 |
| Stützenhöhe* ($F_{All,8}$) | 0,90 | 0,40 |
| Anzahl der jährlichen Betriebsstunden* ($F_{All,9}$) | 0,01 | 0,004 |
| **Summe der Werte für die potentiellen "Schwachstellen"** | **2,20** | **0,95** |
| Vorschädigungen* ($F_{All,10}$) | 1,0 | 0 |
| **Gesamtwert der allgemeinen schwingungstechnischen Aspekte $K_{All}$** (Produkt aus den Werten für die Quellen und den Schwachstellen zuzüglich dem Wert für die Vorschädigungen) | **51,6** | **11,4** |
| *** Der Maximalwert ist nach oben offen. Angegeben ist ein maximaler Richtwert.** | | |

Die Koinzidenzanalyse ist ein wesentlicher Bestandteil für die schwingungstechnische Charakterisierung der GDRM-Anlagen. Bei der Koinzidenzanalyse werden zuerst die relevanten akustischen und mechanischen Eigenfrequenzen ermittelt und miteinander verglichen. Aus der Analyse ergeben sich keine diskreten Frequenzen sondern Frequenzbereiche. Der Bereich der jeweiligen akustischen Eigenfrequenzen ist durch die unterschiedlichen Betriebsparameter (Druck, Temperatur) und der somit unterschiedlichen Schallgeschwindigkeiten des Erdgases gegeben. Falls dieser Bereich kleiner als +/- 10 % um den Mittelwert ist, wird er auf +/- 10 % erweitert, um eventuelle Unsicherheiten (z. B. in der Gaszusammensetzung) zu berücksichtigen.

Der Frequenzbereich der jeweiligen mechanischen Eigenfrequenzen ergibt sich aus einer Unsicherheit der vereinfachten Berechnung, die hiermit +/- 20 % angenommen wird. Wenn die Frequenzbereiche der akustischen und mechanischen Eigenfrequenzen überlappen, besteht die Gefahr eines Resonanzfalls mit potentiell hohen Schwingungen. Außerdem muss der Rohrleitungsabschnitt, in dem die mechanische Eigenfrequenz auftritt, komplett innerhalb des Rohrleitungsbereiches liegen, in dem die akustische Eigenfrequenz auftritt.

Für die Höhe einer Bewertungskennziffer sind folgende Kriterien ausschlaggebend:

- der Überlappungsgrad zwischen akustischem und mechanischem Eigenfrequenzbereich $F_{Ko,1}$
- das Vorhandensein von potentiellen Erregerquellen in dem betroffenen Bereich und die Größe der Anregung $F_{Ko,2}$
- das Vorhandensein von potentiellen Schwachstellen in dem betroffenen Bereich $F_{Ko,3}$

Somit ergibt sich der Zusammenhang:

$$K_{Ko} = F_{Ko,1} \cdot F_{Ko,2} \cdot F_{Ko,3} \cdot 40$$

Der Faktor 40 ergibt sich aus den maximalen Werten und den Werten der Modellanlage in Relation zu den Werten, die in die allgemeine Kennziffer eingehen.

Der Faktor $F_{Ko,1}$ nimmt Werte zwischen 0 und 1 an. Er wird 1, wenn eine komplette Überlappung vorhanden ist und nimmt linear mit dem Überlappungsgrad ab (siehe Abbildung 2).

Der Faktor $F_{Ko,2}$ wird aus zwei Summanden gebildet. Der erste berücksichtigt die Anregung über das Regelventil (Volumenänderungsleistung) und der zweite die maximale Strömungsgeschwindigkeit $W_{max}$ in diesem Anlagenteil. Die Gewichtung ist auf 80 % aus der Anregung über das Regelventil und auf 20 % über die Anregung durch die Strömungsgeschwindigkeit innerhalb der Rohrleitungen zurückzuführen. Je nach Art einer eventuell lärmarm ausgeführten Regelarmatur wird der Wert der Volumenänderungsleistung vermindert. Bei einer einstufig ausgeführten Armatur mit nachgeschaltetem Schalldämpfer wird der Wert halbiert. Ist die Druckreduzierung mehrstufig ausgeführt (Labyrinth oder Metallschaum), wird der Wert durch 4 dividiert.

$$F_{Ko,2} = 0,8 \cdot \frac{\dot{V}_{B,vorRV} \cdot p_{vor,RV} \cdot In\left(\frac{p_{vor,RV}}{p_{nach,RV}}\right)}{5 \cdot 10^6 [W]} + 0,2 \cdot \frac{w_{max}}{20[m/s]}$$

Mit $\dot{V}_{B,vorRV}$ als maximaler Betriebsvolumenstrom vor dem Regelventil der jeweiligen Regelschiene in $m^3/s$ und p als Druck vor - bzw. nach - dem Regelventil in Pa. Durch die auf Referenzwerte bezogene Ermittlung der Faktoren kann der Faktor $F_{Ko,2}$ Werte über 1 aufnehmen

Der Faktor $F_{Ko,3}$ wird aus der gewichteten Anzahl der möglichen Schwachstellen gebildet, die sich in dem Rohrleitungsabschnitt der festgestellten Koinzidenz befinden:

$$F_{Ko,3} = \left(\frac{H_{Stu}}{1[m]} + \frac{Anz_{WÜT}}{250} + \frac{Anz_{Fla}}{25} + \frac{Anz_{Mes}}{10} + \frac{Anz_{Kla}}{1} + 1\right) / 6$$

mit

$H_{Stu}$ als mittlere Höhe der Stützen
$Anz_{WÜT}$ als Anzahl der Wärmeübertragerrohre
$Anz_{Fla}$ als Anzahl der Flansche
$Anz_{Mes}$ als Anzahl der abgehenden Kleinleitungen und
$Anz_{Kla}$ als Anzahl der Rückschlagklappen

Die Restunsicherheit ist durch den Summanden 1 berücksichtigt. Auch dieser Faktor kann größer als 1 werden.

Der für die Faktoren zu erwartende Maximalwert - bzw. die Werte der Modellanlage - finden sich in Tabelle 3.

Tabelle 3: Werte für die Gewichtungsfaktoren zur Ermittlung der Kennziffer aus der Koinzidenzanalyse (maximal und für die Modellanlage).

| Koinzidenz Kennziffer $K_{Ko}$ | Maximum | Modellanlage |
|---|---|---|
| Faktor $F_{Ko,1}$ | 1,0 | 0,8 |
| Faktor $F_{Ko,2}$ | 1,1 | 0,8 |
| Faktor $F_{Ko,3}$ | 1,1 | 0,5 |

Der Ablauf dieser Bewertung ist schematisch in der Abbildung 3 dargestellt.

In Ergänzung zur Koinzidenzanalyse bildet die schwingungstechnische Einordnung der GDRM-Anlagen anhand von allgemeinen Aspekten den zweiten Bewertungsblock. Die allgemeinen Aspekte können in schwingungsanregende Quellen und schwingungstechnische potentielle Schwachstellen eingeteilt werden. Die nachfolgende Aufzählung gibt einen Überblick über die möglichen schwingungsanregenden Quellen und Schwachstellen in einer GDRM-Anlage.

Zu den schwingungsanregenden Quellen zählen u. a.:

- Regelventile (Druckabbau, Reglerschwingungen)
- Wärmeübertrager
- Behälter mit Einbauten
- Tauchhülsen
- Anfahrsiebe
- Umlenkungen
- Querschnittssprünge
- Rückschlagklappen
- Wirbelzähler
- Corioliszähler
- Kolbenkompressoren
- äußere Einflüsse (z. B. Verkehrserschütterungen)
- in die Strömung hereinragende Teile

- pulsierende Strömung am Eintritt in die GDRM-Anlage.

Bei den schwingungstechnischen potentiellen Schwachstellen können folgende Punkte eine Rolle spielen:

- Wärmeübertragerrohre
- Flanschverbindungen
- Tauchhülsen
- Abgehende Kleinleitungen
- Dichtungen
- hohe Lagerstützen
- Alterungseffekte
- fehlerhafter Einbau.

Nicht alle der zuvor aufgezählten Punkte werden bei der Untersuchung des schwingungstechnischen Risikos von GDRM-Anlagen berücksichtigt. Darüber hinaus werden für die Berechnung der allgemeinen Kennziffer die Auslegung des Regelventils und die unterschiedliche Verfahrensweise der GDRM-Anlage berücksichtigt. Im Allgemeinen steigt die Höhe der schwingungstechnischen Anregung mit der Höhe des Volumenstromes an. Wenn eine Anlage häufig angefahren wird, können unterschiedliche Schwingungsanregungen auftreten.

Bei den Schwachstellen der Anlage werden neben den in der Anlage vorhandenen Komponenten auch das Planungsalter, die Anzahl der Betriebsstunden der Anlage berücksichtigt.

Neben den Quellen und potentiellen Schwachstellen ist zudem entscheidend, ob eine in den Rohrleitungen auftretende Pulsation Angriffspunkte im Rohrleitungssystem findet, womit mechanische Schwingungen angeregt werden können. Solche Angriffspunkte stellen Umlenkungen (an T-Stücken und Rohrleitungsbögen) und Querschnittssprünge (Regelarmatur, Blenden, Rohrerweiterungen) dar.

Für die Ermittlung der allgemeinen Kennziffer $K_{All}$ werden die nachstehenden Aspekte behandelt:

- Alter der Anlage
- Alter von wesentlichen Anlagenteilen
- Fahrweise der Anlage
- Rohrleitungskomponenten in der Anlage
- Tauchhülsen in der Anlage
- Auslegung des Regelventils
- maximale Strömungsgeschwindigkeit
- Volumenänderungsleistung über dem Regelventil
- schwingungsbedingte Vorschädigungen

Die allgemeine Kennziffer setzt aus den Bewertungszahlen der Einzelaspekte entsprechend der nachstehenden Gleichung zusammen. Der erste Faktor besteht aus den Summanden $F_{All,1}$ bis $F_{All,3}$, die die potentiellen Quellen in den GDRM-Anlagen darstellen. Zur Berücksichtigung von Unsicherheiten ist der Wert 1 als Summand hinzugefügt. Der zweite Faktor, der aus den Summanden $F_{All,4}$ bis $F_{All,9}$ besteht, fasst die potentiellen Schwachstellen in der Anlage zusammen. Der letzte Summand $F_{All,10}$ berücksichtigt die in der Vergangenheit aufgetretenen schwingungstechnischen Schäden der Anlage. In Tabelle 2 wurden diese Werte bereits gezeigt, damit die Gewichtung der einzelnen Aspekte in Relation zueinander deutlich wird. Im Folgenden soll jeder einzelne Aspekt genauer erklärt werden.

$$K_{All} = (F_{All,1} + F_{All,2} + F_{All,3} + 1) \cdot (F_{All,4} + F_{All,5} + F_{All,6} + F_{All,7} + F_{All,8} + F_{All,9}) + F_{All,10}$$

Das Regelventil stellt in GDRM-Anlagen, die normalerweise ohne Verdichter betrieben werden, die größte Quelle für Druckpulsationen dar. Dies ist über die Volumenänderungsleistung über dem Regelventil schon bei der Koinzidenzanalyse berücksichtigt worden. Die Anregung wird noch verstärkt, wenn der Öffnungsgrad des Regelventils klein ist. Neben dieser Anregung können zudem noch Reglerschwingungen auftreten, die einerseits durch die Regelungsparameter und andererseits über die Stellung des Ventils beeinflusst werden, da die Regler häufig nicht im gesamten Hubbereich eine einheitliche Regelcharakteristik aufweisen. Wenn der Hub des Regelventils bei 75 % Last (bezogen auf den maximalen Nennvolumenstrom und mittlerer Druckdifferenz über dem Regelventil) weniger als 15 % vom Maximalhub beträgt, dann ist zu vermuten, dass eine Regelung in kleinere Lastbereiche hinein schwierig wird. Liegt der Öffnungsgrad z. B. bei 70 % und darüber, dann hat das Regelventil wenig Reserven nach oben. Dies wir durch den verwendeten Summand $F_{All,1}$ nach Abbildung 4 berücksichtigt.

Neben der Stellung des Regelventils ist die Volumenänderungsleistung über dem Ventil und die Strömungs-

geschwindigkeit $W_{max}$ im Rohrleitungssystem der Anlage ein weiterer wichtiger Faktor für die Anregung von Pulsationen und Schwingungen. Der maximale Betriebsvolumenstrom in der jeweiligen Regelschiene $\dot{V}_{B,vorRv}$ im Zusammenhang mit dem Druck vor dem Regelventil $P_{vor,RV}$ und der Druckdifferenz über dem Regelventil $P_{vor,RV}$ / $P_{nach,RV}$ geht als Volumenänderungsleistung in die allgemeine Kennziffer ein:

$$F_{All,2} = 0{,}8 \cdot \frac{\dot{V}_{B,vorRV} \cdot P_{vor,RV} \cdot In\left(\frac{p_{vor,RV}}{p_{nach,RV}}\right)}{1 \cdot 10^6 [W]} + 0{,}2 \cdot \frac{w_{\max}}{4[m/s]}$$

Die Fahrweise der Anlage hat Einfluss auf die möglichen unterschiedlichen schwingungsrelevanten Anregungsmechanismen. Dieser Aspekt umfasst die jährliche Anzahl von An- und Abfahrvorgängen und die variierende Belastung der Anlage.

$$F_{All,3} = FW_{Anf} + FW_{Aus,Tag} + FW_{Aus,Woche}$$

Häufige An- und Abfahrvorgänge stellen eine stärkere Belastung der Anlage dar als eine kontinuierliche Betriebsweise. Außerdem werden dann Betriebsbedingungen durchfahren, die möglicherweise im stationären Betrieb nicht relevant und somit hinsichtlich ihrer schwingungstechnischen Auswirkungen eher unbekannt sind. Das gleiche gilt für stark schwankende Auslastungen der Anlage.

Die jährliche Anzahl der Anfahrvorgänge ($Anz_{Anfahr}$) wird berücksichtigt durch

$$FW_{Anf} = 0{,}2 \cdot Anz_{Anfahr}$$

Die schwankende Auslastung wird durch eine Schwankung der Stundenwerte um einen Mittelwert pro Tag bzw. pro Woche gebildet.

$$Schwankungsbreite_{Tag/Woche} = \frac{Stundenwert}{Stundenmittelwert_{Tag/Woche}} \cdot 100[\%]$$

Aus dieser Schwankungsbreite werden nach Tabelle 4 die Kennwerte für die Fahrweise pro Tag ($FW_{Aus,Tag}$) und pro Woche ($FW_{Aus,Woche}$) bestimmt.

Tabelle 4: Überblick über die Kennwerte $FW_{Anz,Tag}$ und $FW_{Anz,Woche}$ zur Berücksichtigung der um einen Mittelwert schwankenden Betriebsweise einer GDRM-Anlage.

| **Kennwerte für die schwankende Betriebsweite pro Tag $FW_{Aus,Tag}$ und Woche $FW_{Aus,Woche}$** | | | | | | |
|---|---|---|---|---|---|---|
| Schwankungsbreite in % | bis 5 | bis 10 | bis 20 | bis 50 | bis 75 | unbekannt |
| Kennwert $FW_{Aus,Tag}$ und Woche $FW_{Aus,Woche}$ | 0,1 | 0,5 | 1 | 1,5 | 2 | 1,5 |

Obwohl die Charakterisierung einer GDRM-Anlage über das Alter aufgrund der häufigen Wartungs- und Umbaumaßnahmen schwierig ist, soll auf zwei Aspekte eingegangen werden. Der erste Aspekt ist die Inbetriebnahme der Anlage. Dieser Punkt spiegelt den Planungsstand der Anlage wieder. Je länger es her ist, dass eine Anlage konzipiert wurde, desto älter ist der ursprüngliche Planungsstand. Dies wird mit einem schwachen linearen Anstieg der Bewertungsziffer mit dem Anlagenalter berücksichtigt. Der Maximalwert liegt einem Wert von 0,2 bei einem Anlagenalter von 50 Jahren und mehr.

$$F_{All,4} = \max \left\{ \frac{Anlagenalter[a]}{50} \cdot 0{,}2;0{,}2 \right\}$$

Der Austausch, bzw. die Demontage von wesentlichen Komponenten der Anlage wird analog zu Betrachtungen aus dem Instandhaltungskonzept berücksichtigt. Bei einem neu montierten Anlagenteil ist die Versagenswahrscheinlichkeit durch z. B. nicht abgestimmte Bauteile, falsche Montage, fehlerhafte Komponenten, Materialfehler und nicht eingefahrene bewegliche Teile hoch. Diese sinkt mit der Zeit schnell ab, verharrt einige Zeit auf niedrigem Niveau und steigt dann mit der Zeit aufgrund von Alterungserscheinungen wieder an (sogenannte "Badewannenfunktionen"). Diese Versagenswahrscheinlichkeit kann auch auf das schwingungstechnische Risiko übertragen werden (siehe Abbildung 5). In der vorliegenden Analyse werden das Alter von Regelventilen, Wärmeübertragern und Messeinrichtungen berücksichtigt. Jede dieser Komponenten, die in der untersuchten GDRM-Anlage vorhanden sind, werden anhand ihres Alters entsprechend des in Abbildung 5 dargestellten Kennwertes charakterisiert.

Bei der Betriebszeit der Komponente ist darauf zu achten, dass dieser Wert nach jeder Demontage sprunghaft seinen Wert verändert.

Die Anzahl der Komponenten umfasst die möglichen Schwachstellen, die nicht gesondert abgefragt werden. Diese Komponenten werden mit den Faktoren zueinander bewertet und ergeben in Summe

$$F_{All,6} = \frac{Anz_{Kla}}{35} + \frac{Anz_{Mes}}{140} + \frac{Anz_{WÜT}}{5600} + \frac{Anz_{Fla}}{1400} + \frac{Anz_{Tst}}{2800} + \frac{La_{Anl}}{700000}$$

| | |
|---|---|
| $Anz_{Kla}$ | als Anzahl der Rückschlagklappen |
| $Anz_{Mes}$ | als Anzahl der abgehenden Kleinleitungen |
| $Anz_{WÜT}$ | als Anzahl der Wärmeübertragerrohre |
| $Anz_{Fla}$ | als Anzahl der Flansche |
| $Anz_{Tst}$ | als Anzahl der T-Stücke |
| $La_{Anl}$ | als Länge der Rohrleitungen in Metern. |

Die Anzahl der in die Strömung hineinragenden Tauchhülsen wird gesondert betrachtet, da einerseits der Ort des Einbaus entscheidend ist und andererseits die Tauchhülsen hier sowohl als Schwachstelle als auch als Quelle für Pulsationen behandelt werden. Berechnet wird der Faktor für die Tauchhülsen ($F_{All,7}$) als

$$F_{All,7} = 0{,}01 \cdot Anz_{Tau,ges} + 0{,}1 \cdot Anz_{Tau,6DNvor} + 0{,}3 \cdot Anz_{Tau,6DNnach}$$

wobei

| | |
|---|---|
| $Anz_{Tau,ges}$ | gesamte Anzahl der Tauchhülsen in der Anlage |
| $Anz_{Tau,6DNvor}$ | Anzahl der Tauchhülsen im Abstand 6*Rohrnennweite stromauf des Regelventils |
| $Anz_{Tau,6Dnnach}$ | Anzahl der Tauchhülsen im Abstand 6*Rohrnennweite stromab des Regelventils. |

Die Aufstellung der Anlage geht mit in die Bewertung, da hohe Stützen durch ihre niedrigeren Eigenfrequenzen unter Umständen eine bei der Rohrleitung auftretende Schwingung nicht so gut abmildern können. Je höher die Anlage aufgestellt ist, desto größer ist das schwingungstechnische Potential. Als Bewertungskriterium wird hier die maximale Stützenhöhe einer Hauptrohrleitung ($H_{Stu,max}$ in Metern) in der Anlage herangezogen:

$$F_{All,8} = 0{,}5 \cdot H_{Stu,max}$$

Der Kennwert für die Anzahl der Betriebsstunden pro Jahr $FW_{Std}$ ist in zwei Bereiche geteilt. Im ersten Bereich ergeben sich für wenige Betriebsstunden pro Jahr (die Anlage befindet sich im Stand-by und wird nur bei Bedarf zugeschaltet) hohe Werte, die mit steigender Betriebsstundenzahl exponentiell abnehmen. Nach einer Betriebsstundenzahl von 1.500 Stunden pro Jahr steigt der Kennwert leicht (linear) wieder an. Dies berücksichtigt die Tatsache, dass ein schwingungsbedingter Schaden nur zu erwarten ist, wenn die Anlage auch tatsächlich betrieben wird (siehe Abbildung 6).

$$F_{All,9} = 0{,}1 \cdot FW_{Std}$$

Die Anzahl der schwingungsbedingten Schäden ($AnZ_{Sch}$), die in der Anlage schon aufgetreten sind, geht ebenfalls mit in die Bewertung ein:

$$F_{All,10} = 1 \cdot Anz_{Sch}$$

Die im Text verwendeten Abkürzungen haben folgende Bedeutung:

| | |
|---|---|
| Anz | Anzahl |
| F | Faktoren / Summanden der Kennziffern |
| FW | Fahrweise |
| H | Höhe |
| I | Flächenträgheitsmoment |
| K | Kennziffer |
| l | Länge |
| La | Anlagenlänge |
| P | diskrete Masse |
| p | Druck |
| $\dot{V}$ | Volumenstrom |
| W | Rohrmasse |
| w | Geschwindigkeit |

| | |
|---|---|
| 6DN,vor | 6 mal Nennweite vor Regelventil |
| 6DN, nach | 6 mal Nennweite nach Regelventil |
| a | außen |
| All | allgemein |
| All,1 - All,9 | Summanden 1 bis 9 für die Ermittlung der allgemeinen Kennziffer |
| Anf | Anfahr |
| Aus,Tag | Anlagenauslegung auf einen Tag bezogen |
| Aus,Woche | Anlagenauslegung auf eine Woche bezogen |
| Fla | Flansch |
| ges | gesamt |
| Kla | Rückschlagklappe |
| Ko | Koinzidenz |
| Ko,1 - Ko,3 | Faktoren 1 bis 3 für die Ermittlung der Koinzidenzkennziffer |
| max | maximal |
| Mes | abgehende Kleinleitungen |
| nach,RV | nach Regelventil |
| Sch | Schaden |
| Std | Stunden |
| Stu | Stützen |
| Stu,max | Stützen, maximal |
| Tau | Tauchhülsen |
| Tau,ges | Tauchhülsen, gesamt |
| Tst | T-Stück |
| vor,RV | vor Regelventil |
| WÜT | Wärmeübertrager |

**Patentansprüche**

1. Verfahren zur schwingungstechnischen Bewertung von Gas-Druckregelanlagen unter Verwendung wenigstens einer Datenverarbeitungseinrichtung, folgende Verfahrensschritte umfassend:

   - Erfassen und/oder Abbilden einer geplanten oder bestehenden Anlagengeometrie,
   - Erfassen der schwingungstechnisch relevanten Bauteile der Anlage ausgewählt aus einer Gruppe umfassend Rohre, Regelorgane, Absperrorgane, Behälter, Wärmeübertrager,
   - Bestimmung von schwingungstechnisch relevanten Randbedingungen, umfassend die Masse und die Geometrie der Bauteile sowie deren Lagerung und/oder Einspannung,
   - die Annahme einer Schwingungsanregung,
   - Ermittlung der akustischen und mechanischen Eigenfrequenzen der Bauteile unter den gegebenen Randbedingungen bei gegebener Anregung, wobei die akustischen Eigenfrequenzen anhand der zuvor ermittelten Randbedingungen und der Schallgeschwindigkeit des Gases bestimmt werden,
- Durchführen einer Koinzidenzanalyse als Bestimmung des Grades der Übereinstimmung der akustischen und mechanischen Eigenfrequenzen für Teile der Anlage, **gekennzeichnet durch** die
- Festlegung einer relativen Kennziffer (Gesamtkennziffer, $K_{ges}$) für die Anlage als Maß für deren schwingungstechnisches Risikopotential,

wobei die Kennziffer für die Anlage sich aus Einzelkennziffern für Teile der Anlage und einer allgemeinen Kennziffer zusammensetzt, die Einzelkennziffern als Funktion der Koinzidenzanalyse für die Teile der Anlage ermittelt werden und die allgemeine Kennziffer in Abhängigkeit eines oder mehrerer Kriterien ausgewählt aus der Gruppe Alter der Anlage, Alter von Anlagenteilen, Fahrweise der Anlage, Anzahl der Komponenten der Anlage, Anzahl der Messstellen in den Rohrleitungen, Höhe der Anlage und schwingungsbedingte Vorschädigungen, bestimmt wird und wobei die Durchführung des Verfahrens vollständig unter Zuhilfenahme der Datenverarbeitungseinrichtung und unter Verwendung einer oder mehrerer Datenverarbeitungsprogramme erfolgt, die auf eine Datenbank zurückgreifen, welche eine Bauteilbibliothek umfasst, in welcher die standardmäßig verwendeten Bauteile katalogisiert und kategorisiert sind, und wobei wenigstens ein Datenverarbeitungsprogramm die Anlagenkennziffer nach Eingabe der Randbedingungen der Anlage und nach Auswahl der in der Anlage verwendeten Bauteile automatisch ermittelt.

2. Verfahren nach Anspruch 1, **dadurch gekennzeichnet, dass** die Koinzidenzanalyse unter Berücksichtigung eines Frequenzbereichs von 5 Hz bis 30 Hz durchgeführt wird.

3. Verfahren nach einem der Ansprüche 1 oder 2, **dadurch gekennzeichnet, dass** die allgemeine Kennziffer zu 50 % bei der Ermittlung der Gesamtkennziffer gewichtet wird.

4. Verfahren nach einem der Ansprüche 1 bis 3, **dadurch gekennzeichnet, dass** die Gesamtkennziffer additiv und/oder multiplikativ aus numerischen Einzelwerten erhalten wurde und dass deren Betrag der Höhe des Risikopotentials der Anlage entspricht.

5. Verfahren nach einem der Ansprüche 1 bis 4, **dadurch gekennzeichnet, dass** die Annahme einer Schwingungsanregung die Bestimmung einer potentiellen Schwingungsanregung durch ein Regelventil umfasst.

6. Verfahren nach einem der Ansprüche 1 bis 5, **dadurch gekennzeichnet, dass** als Teile der Anlage mehrere Anlagenabschnitte betrachtet werden.

## Claims

1. Method for the oscillation evaluation of gas pressure control installations by using at least one data processing device, comprising the following method steps:

- detecting and/or mapping a planned or existing installation geometry,
- detecting the oscillation-relevant components of the installation, selected from a group comprising pipes, control elements, shut-off elements, containers, heat exchangers,
- determining the oscillation-relevant boundary conditions, comprising the mass and the geometry of the components and their support and/or clamping,
- the assumption of oscillation excitation,
- determining the acoustic and mechanical natural frequencies of the components under the given boundary conditions with given excitation, the acoustic natural frequencies being determined by using the previously determined boundary conditions and the speed of sound of the gas,
- carrying out a coincidence analysis as a determination of the level of coincidence of the acoustic and mechanical natural frequencies for parts of the installation, **characterized by** the
- definition of a relative index (overall index, $K_{ges}$) for the installation as a measure of its oscillation risk potential,

wherein the index for the installation is composed of individual indices for parts of the installation and of a general index, the individual indices are determined as a function of the coincidence analysis for the parts of the installation, and the general index is determined as a function of one or more criteria selected from the group comprising age of the installation, age of installation parts, mode of operation of the installation, number of components of the installation, number of measuring points in the pipelines, height of the installation and oscillation-induced prior damage, and wherein the method is carried out completely with the aid of the data processing device and by using one or more data processing programs which fall back on a database which comprises a component library, in which the components used as standard are catalogued and categorized, and wherein at least one data processing program determines the installation index automatically following the entry of the boundary conditions of the installation and following the selection of the components used in the installation.

2. Method according to Claim 1, **characterized in that** the coincidence analysis is carried out whilst taking a frequency range from 5 Hz to 30 Hz into account.

3. Method according to either of Claims 1 and 2, **characterized in that** the general index is weighted by up to 50% in the determination of the overall index.

4. Method according to one of Claims 1 to 3, **characterized in that** the overall index has been obtained by addition and/or multiplication from numeric individual values, and **in that** its magnitude corresponds to the level of the risk potential of the installation.

5. Method according to one of Claims 1 to 4, **characterized in that** the assumption of oscillation excitation comprises the determination of a potential oscillation excitation by a control valve.

6. Method according to one of Claims 1 to 5, **characterized in that** a plurality of installation sections are viewed as parts of the installation.

## Revendications

1. Procédé d'évaluation d'installations de régulation de pression de gaz par technologie de vibration en utilisant au moins un dispositif de traitement de données, comprenant les étapes suivantes :

- acquisition et/ou représentation d'une géométrie d'installation planifiée ou existante,
- acquisition des éléments structuraux de l'installation qui sont pertinents du point de vue de la technologie de vibration à partir d'un groupe comprenant des tubes, des organes de régulation, des organes d'arrêt, des récipients, des échangeurs de chaleur,
- détermination des conditions aux limites pertinentes du point de vue de la technologie de vibration, comprenant la masse et la géométrie des éléments structuraux ainsi que leur assise et/ou leur fixation,
- l'hypothèse d'une excitation en vibration,
- détermination des fréquences propres acoustiques et mécaniques des éléments structuraux dans les conditions aux limites données avec l'excitation donnée, les fréquences propres acoustiques étant déterminées à l'aide des conditions aux limites déterminées précédemment et de la vitesse du son dans le gaz,
- réalisation d'une analyse de coïncidence en tant que détermination du degré de concordance des fréquences propres acoustiques et mécaniques pour des parties de l'installation,

**caractérisé par** la

- définition d'un indice caractéristique relatif (indice caractéristique total, $K_{ges}$) pour l'installation en tant que mesure pour son potentiel de risque technique de vibration,

l'indice caractéristique pour l'installation se composant d'indices caractéristiques individuels pour des parties de l'installation et d'un indice caractéristique général, les indices caractéristiques individuels étant déterminés en fonction de l'analyse de coïncidence pour les parties de l'installation et l'indice caractéristique général étant déterminé en fonction d'un ou plusieurs critères sélectionnés dans le groupe incluant l'âge de l'installation, l'âge des parties de l'installation, le nombre de points de mesure dans les conduites tubulaires, la hauteur de l'installation et les dommages préalables liés aux vibrations, et la mise en oeuvre du procédé s'effectuant intégralement à l'aide du dispositif de traitement de données et en utilisant un ou plusieurs programmes de traitement de données qui font appel à une base de données, laquelle comporte une bibliothèque d'éléments structuraux dans laquelle les éléments structuraux utilisés en standard sont catalogués et catégorisés, et au moins un programme de traitement de données déterminant automatiquement l'indice caractéristique de l'installation après la saisie des conditions aux limites de l'installation et après la sélection des éléments structuraux utilisés dans l'installation.

2. Procédé selon la revendication 1, **caractérisé en ce que** l'analyse de coïncidence est effectuée en tenant compte d'une plage de fréquences de 5 Hz à 30 Hz.

3. Procédé selon l'une des revendications 1 ou 2, **caractérisé en ce que** l'indice caractéristique général est pondéré à 50 % lors de la détermination de l'indice caractéristique total.

4. Procédé selon l'une des revendications 1 à 3, **caractérisé en ce que** l'indice caractéristique total a été obtenu par addition et/ou multiplication à partie de valeur numériques individuelles et **en ce que** leur montant correspondant à l'importance du potentiel de risque de l'installation.

5. Procédé selon l'une des revendications 1 à 4, **caractérisé en ce que** l'hypothèse d'une excitation en vibration comprend la détermination d'une excitation en vibration par une vanne de régulation.

6. Procédé selon l'une des revendications 1 à 5, **caractérisé en ce que** plusieurs portions de l'installation sont prises en compte en tant que parties de l'installation.

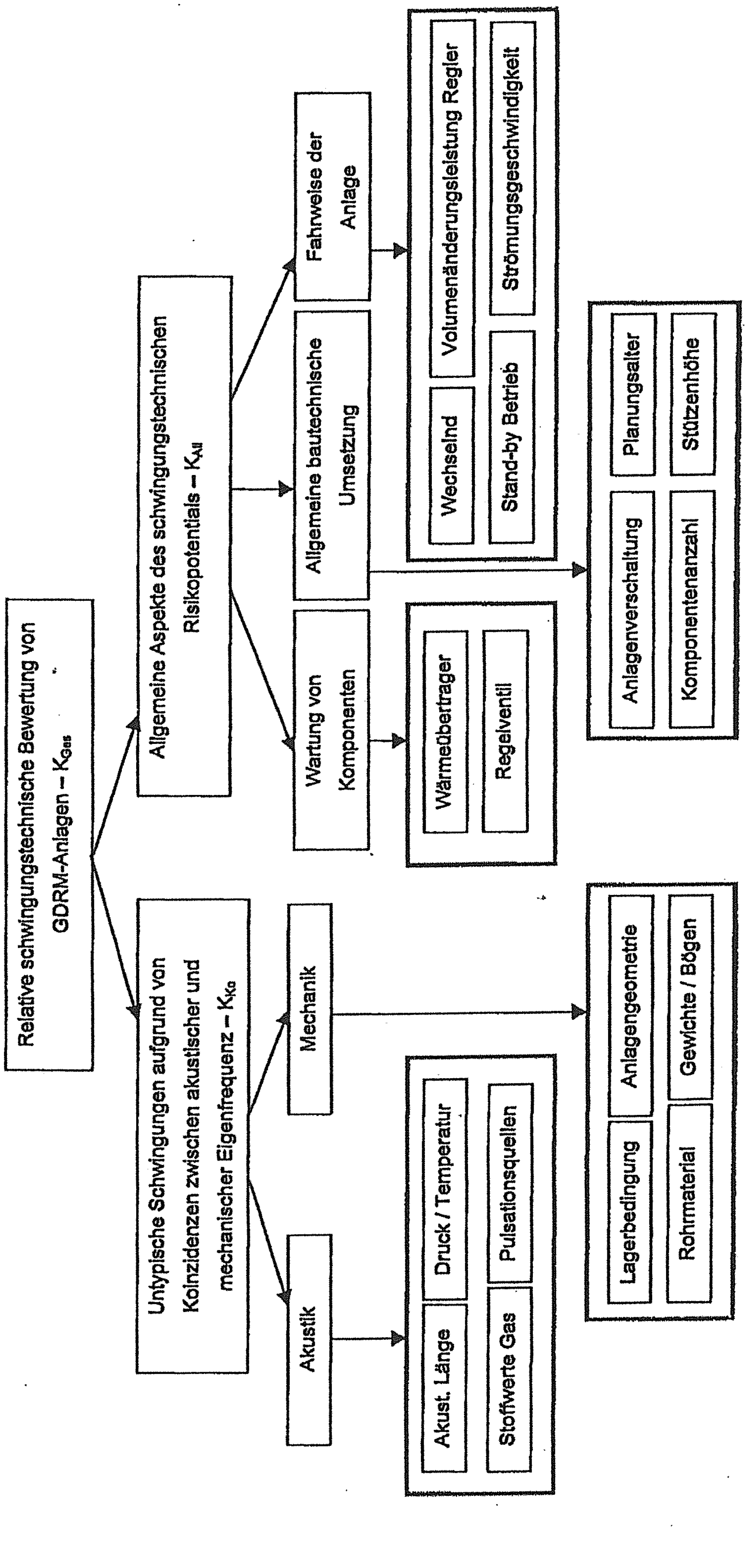


Abbildung 1: Verzweigungsbaum der Aspekte zur schwingungstechnischen Bewertung von GDRM-Anlagen.

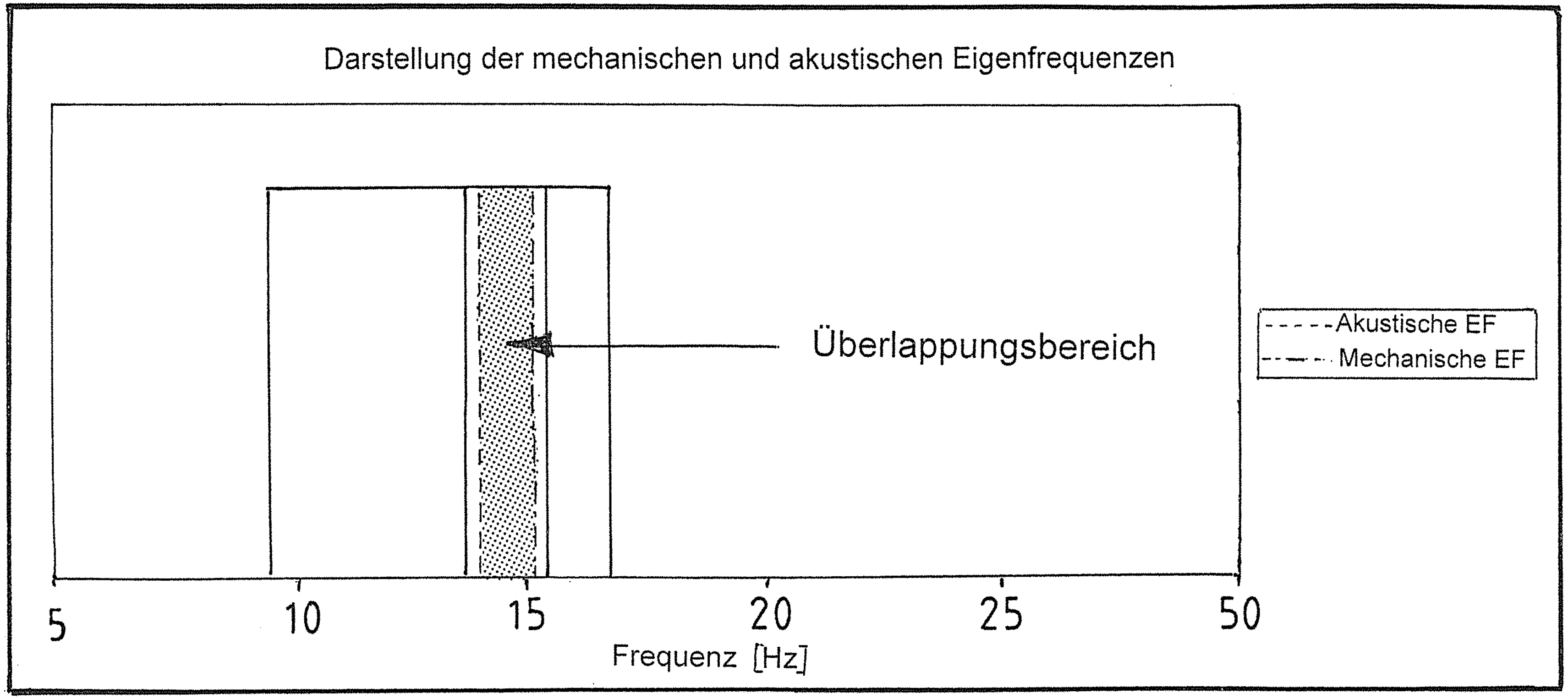


Abb.2 Darstellung des Überlappungsbereiches der mechanischen und akustischen Eigenfrequenz für die Berechnung des Faktors $F_{KO.1}$ zur Bestimmung der Kennziffer aus der Koinzidenzanalyse.

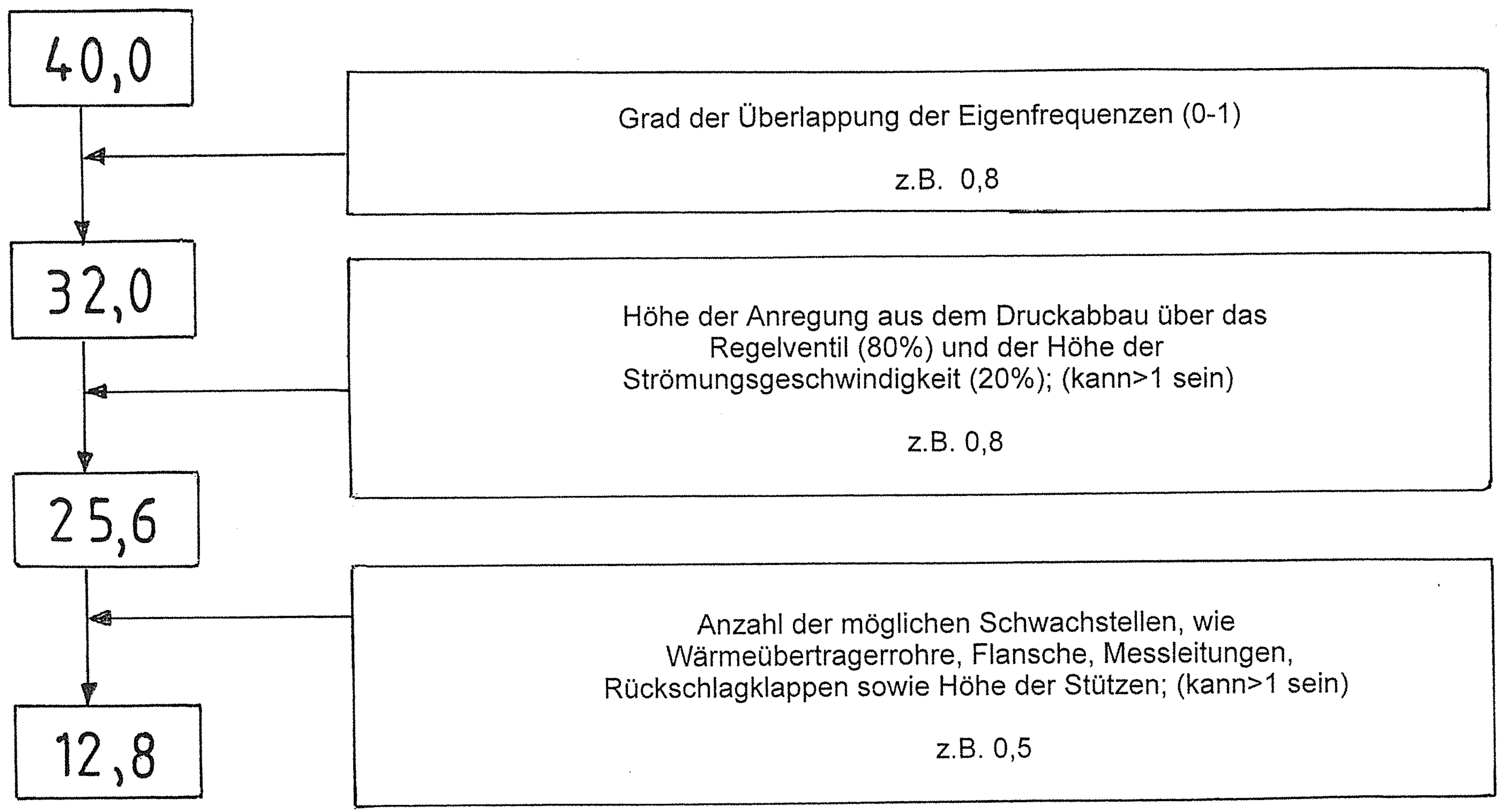


Abb.3 Beispielhafte Ermittlung der Kennziffer aus der Koinzidenzanalyse im Ablaufdiagramm.

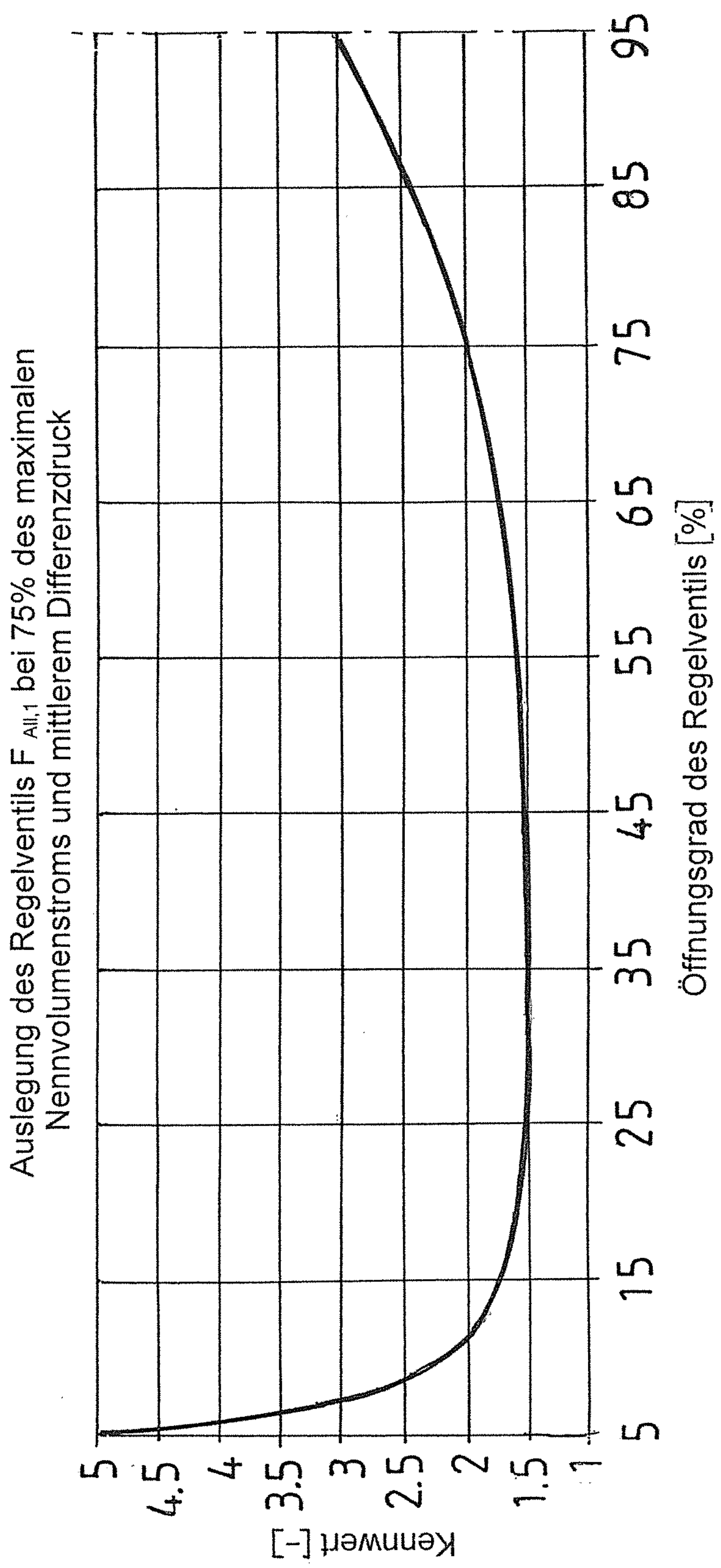


Kennwert F $_{All,1}$ zurBerücksichtigung der Auslegung des Regelventils

Abb.4

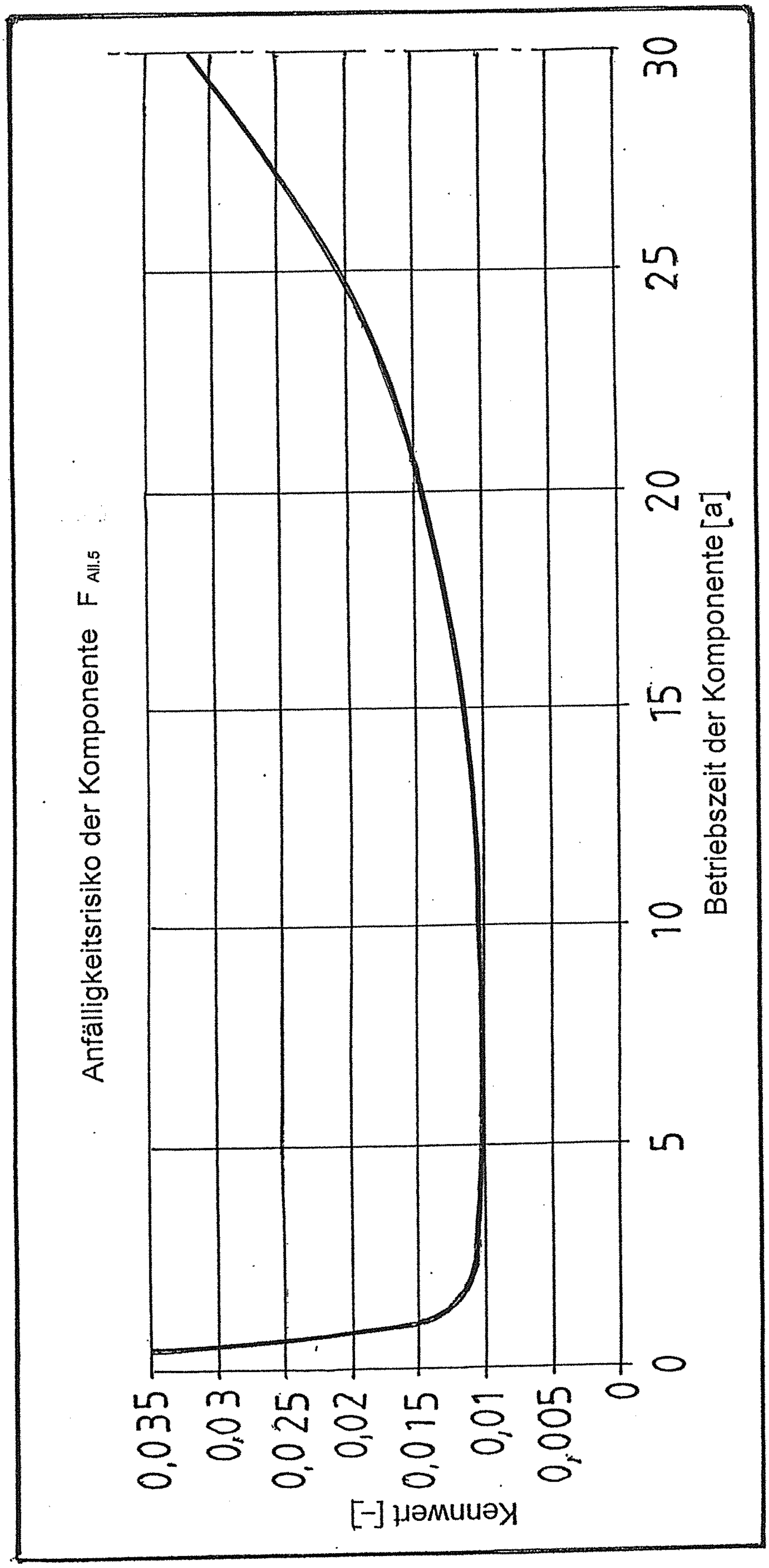


Abb.5

Darstellung des Kennwertes für das Anfälligkeitsrisiko einer Komponente $F_{All.5}$ in Bezug auf Ihre Betriebszeit

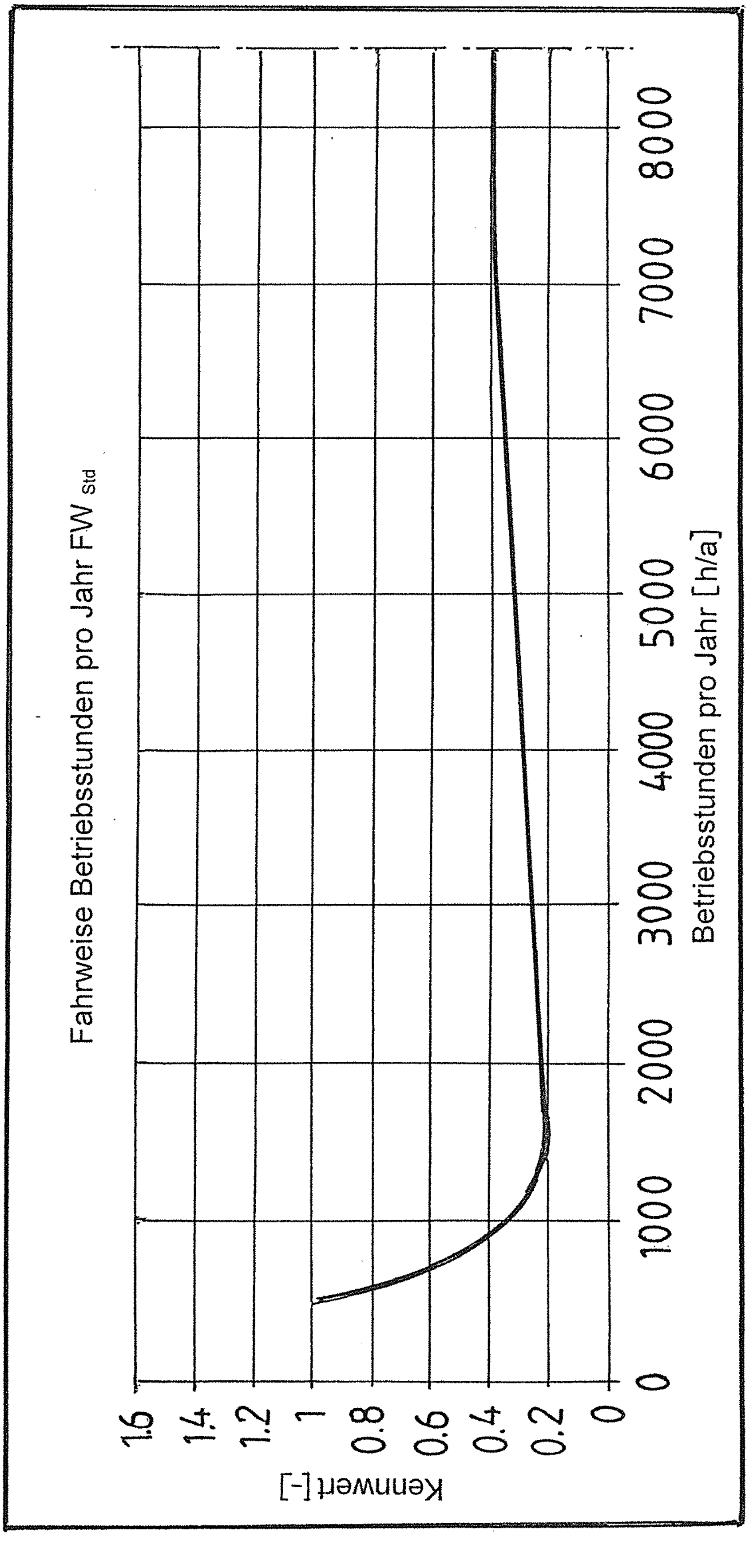


Abb.6

Kennwert $FW_{Std}$ für die Berücksichtigung der jährlichen Betriebsstunden

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102008015588 A1
- EP 1182300 A1
- WO 2007102155 A2
- DE 2008005700 A1


### In der Beschreibung aufgeführte Nicht-Patentliteratur


- **DR. JOHANN LENZ.** Untersuchungen von strömungs-und schwingungstechnischen Effekten an Gasdruckregelanlagen. *Kötter Workshop Gasmengenmessung,* 2010, vol. 5
- **IGOR BAZOVSKY.** *Reliability Theory and Pratice,* 31. Dezember 2004